# EUROPÄISCHE PATENTSCHRIFT

(11) **EP 3 894 103 B1**
(45) Veröffentlichungstag und Bekanntmachung des Hinweises auf die Patenterteilung: **09.10.2024**
(21) Anmeldenummer: 19836450.7
(22) Anmeldetag: 06.12.2019
(51) Int. Cl.: B21D 5/02, B21D 37/14, F16G 13/16, H02G 11/00

(54) **WERKZEUG-TRANSFERVORRICHTUNG**
TOOL TRANSFER APPARATUS
DISPOSITIF DE TRANSFERT D'OUTILS

(30) Priorität: 13.12.2018 AT 511032018
(43) Veröffentlichungstag der Anmeldung: 20.10.2021
(73) Patentinhaber: TRUMPF Maschinen Austria GmbH & Co. KG., 4061 Pasching (AT)
(72) Erfinder: FISCHEREDER, Bernhard, 4901 Ottnang am Hausruck (AT); TONDA ROCH, Andrea, 10141 Torino (IT); VIDOTTO, Giovanni, 10023 Chieri (TO) (IT)
(74) Vertreter: Burger, Hannes
(86) Internationale Anmeldenummer: PCT/AT2019/060418
(87) Internationale Veröffentlichungsnummer: WO 2020/118326

(56) Entgegenhaltungen:
- EP-A1- 2 946 846
- EP-B1- 2 946 846
- DE-U1- 202016 105 840
- JP-A- H06 182 463
- JP-U- H0 671 036

## Beschreibung

Die Erfindung betrifft eine Werkzeug-Transfervorrichtung zum Verschieben eines oder mehrerer Werkzeuge, insbesondere Biegewerkzeuge, in einer Führungsschiene gemäß dem Oberbegriff des Anspruch 1. Die Erfindung betrifft auch eine Werkzeug-Beschickungsvorrichtung und ein Verfahren zum Verschieben eines oder mehrerer Werkzeuge in einer Führungsschiene.

Um das Beschicken von Bearbeitungsmaschinen mit Werkzeugen (Rüsten, Werkzeugwechsel, Ablegen in einem Werkzeugspeicher, etc.) zu automatisieren, werden Werkzeug-Transfervorrichtungen in Form von angetriebenen Schubketten verwendet, die die Werkzeuge entlang von Führungen verschieben. Solche Schubketten weisen an ihrem werkzeugseitigen Ende Ankopplungseinrichtungen (z.B. Magnete, Saugmittel, mechanische Greifer, etc.) auf, mit denen das Werkzeug an die Kette angekoppelt wird. Zum Betätigen der Ankopplungseinrichtungen ist es notwendig, einerseits (elektrische) Energie bereitzustellen anderseits Steuersignale zu übermitteln. Ersteres kann mit einem - im werkzeugfernen Bereich der Schubkette befindlichen - elektrischen Energiespeicher, letzteres durch eine Funkverbindung zur Ankopplungseinrichtung gelöst werden.

Nachteilig ist jedoch, dass Störungen der Funkverbindung immer wieder zu Ausfällen und somit folgenschweren Fehlern beim Rüstvorgang führen. Außerdem müssen die Energiespeicher ständig ausgetauscht oder geladen werden; sie erhöhen darüber hinaus das Gewicht und den Platzbedarf im Bereich des werkzeugseitigen Endes der Schubkette.

Die JPH06182463A offenbart einen innerhalb einer Führung bewegbaren flexiblen Körper zum Übertragen von Zug und Druck. Dabei ist innerhalb einer Kette, deren Kettenglieder seitliche Rollen aufweisen, ein Kanal für ein elektrisches Kabel und ein Fluiddruckschlauch ausgebildet.

Die JPH0671036U offenbart für eine Presse eine Klemmvorrichtung, die entlang einer Führungsschiene verfahrbar ist. Zum Verfahren der Klemmvorrichtung ist ein ebenfalls in der Führungsschiene geführtes, flexibles Zug- und Druckübertragungsmittel vorgesehen, welches aus einer Art Speicher ausgefahrbar bzw. in diesen wieder einfahrbar ist. Das flexibles Zug- und Druckübertragungsmittel trägt zudem eine Versorgungsleitung für Klemmvorrichtung. Bis zu der Klemmvorrichtung verläuft auch die Versorgungsleitung innerhalb der Führungsschiene.

Die DE202016105840U1 offenbart für einen langgestreckten, flexiblen Körper eine Schnelllauf-Hubvorrichtung mit Versorgungsleitung und Energieführungskette. Die Energieführungskette ist dabei in ein spiralförmig verlaufendes Führungsprofil einfahrbar bzw. aus diesem herausfahrbar.

Beispielsweise offenbart die EP2946846B1, auf welcher der Oberbegriff des Patentanspruchs 1 basiert, eine Schubkette mit integrierter Leitung. Die Schubkette kann in eine Aufnahme mit spiralartiger Führung eingefahren werden. Die EP2946846B1 enthält jedoch keine Lehre darüber, wohin die Leitung verläuft bzw. wie sie mit der Steuerung bzw. Energieversorgung verbunden ist. Gerade diese Aufgabe stellt jedoch aufgrund des spiralartigen Verlaufs der Führung ein großes Problem dar.

Die Aufgabe der vorliegenden Erfindung war es, die sich aus dem Stand der Technik ergebenden Probleme zu lösen und eine Werkzeug-Transfervorrichtung zur Verfügung zu stellen, mit der eine zuverlässige Versorgung und Ansteuerung der werkzeugseitigen Ankopplungsvorrichtung und allenfalls auch anderer auf das Werkzeug wirkender Effektoren sichergestellt sind. Gleichzeitig soll das Ein- und Ausfahren der Schub- und Zugübertragungseinrichtung in bzw. aus der Aufnahme leicht und reibungslos von statten gehen. Bevorzugt soll der Tatsache Rechnung getragen werden, dass die Führung in der Aufnahme gebogen oder spiralartig verlaufen kann.

Diese Aufgabe wird mit einer eingangs erwähnten Werkzeug-Transfervorrichtung dadurch gelöst, dass die, vorzugsweise spiralartig verlaufende, Führung eine sich entlang des Führungsverlaufs erstreckende Längsöffnung aufweist und dass ein zweiter Abschnitt der Versorgungsleitung außerhalb der Schub- und Zugübertragungseinrichtung und außerhalb der Führung der Aufnahme verläuft und dass die Versorgungsleitung zwischen dem ersten Abschnitt und dem zweiten Abschnitt an einer Austrittsstelle, die in einem - sich in der Führung der Aufnahme befindlichen - Bereich der Schub- und Zugübertragungseinrichtung angeordnet ist, aus dem Kanal austritt und
dass die Versorgungsleitung zwischen dem ersten Abschnitt und dem zweiten Abschnitt, vorzugsweise im Bereich der Austrittsstelle, durch die Längsöffnung aus der Führung der Aufnahme austritt und
dass die Schub- und Zugübertragungseinrichtung im Bereich ihres werkzeugseitigen Endes eine an die Versorgungsleitung angebundene Ankopplungseinrichtung zum Ankoppeln eines Werkzeuges an die Schub- und Zugübertragungseinrichtung und/oder einen an die Versorgungsleitung angebundenen Effektor zum Einwirken auf ein Werkzeug, insbesondere eine Einstelleinrichtung zur Durchführung einer Werkzeugeinstellung, aufweist und
dass die Austrittsstelle, an der die Versorgungsleitung aus dem Kanal austritt, in der Schub- und Zugübertragungseinrichtung im Bereich des werkzeugfernen Endes der Schub- und Zugübertragungseinrichtung ausgebildet ist.

Die Austrittsstelle, an der die Versorgungsleitung aus dem Kanal austritt, kann in der Schub- und Zugübertragungseinrichtung selbst ausgebildet sein, vorzugsweise im Bereich des werkzeugfernen Endes der Schub- und Zugübertragungseinrichtung. Beim Einfahren bzw. Ausfahren der Schub- und Zugübertragungseinrichtung bewegt sich auch die Austrittsstelle des Kanals entlang der Führung. Der Übergangsbereich der Versorgungsleitung zwischen erstem Abschnitt und zweitem Abschnitt bewegt sich somit ebenfalls entlang der Führung. Die Erfindung löst das eingangs erwähnte Problem dadurch, dass die Versorgungsleitung mit ihrem ersten Abschnitt bzw. ihrem Übergangsbereich (zwischen erstem und zweiten Abschnitt) entlang der Führung bewegt wird und dass der zweite Abschnitt einen Verlauf hat, der zwar in gewissem Ausmaß von der Position der Schub- und Zugübertragungseinrichtung in der Führung abhängen kann, aber nicht mehr dem Verlauf der Führung folgt. Dadurch erfolgt eine teilweise Entkopplung, die es ermöglicht, die Versorgungsleitung mit ihrem zweiten Abschnitt zu einer Versorgungseinrichtung zu leiten.

Die Längsöffnung kann bevorzugt dadurch gebildet sein, dass die Führung nach einer Seite hin offen ist, wodurch eine durchgehende Öffnung entlang der Führung vorhanden ist. Durch diese Längsöffnung wird die Versorgungsleitung hindurchgeführt, wenn der Kanal im Inneren der Führung verläuft. Für den Fall, dass sich der Kanal außerhalb der Führung befindet (z.B. weil ein Teil des Querschnitts der Schub- und Zugübertragungseinrichtung nicht oder nicht vollständig von der Führung aufgenommen ist), erübrigt sich ein Hindurchführen der Versorgungsleitung durch die Längsöffnung.

Die längliche Schub- und Zugübertragungseinrichtung ist flexibel; sie kann insbesondere aus einer Kette aus miteinander verbundenen Kettengliedern, einem elastisch verformbaren, z.B. schlangenähnlichen, Körper oder einem seil- oder riemenartigen Körper gebildet sein.

Die Schub- und Zugübertragungseinrichtung kann an ihrem werkzeugseitigen Ende einen Shuttle bzw. Schlitten aufweisen. Hierbei kann es sich um eine funktionelle Komponente handeln, an der z.B. eine Ankopplungseinrichtung zum Ankoppeln eines oder mehrerer (Biege-)Werkzeuge ausgebildet ist.

Die Führung der Aufnahme geht in die Führungsschiene, in der das/die Werkzeuge gehalten werden, über, sodass die Schub- und Zugübertragungseinrichtung von der Führung der Aufnahme ungehindert in die Führungsschiene übertreten kann. Die Führungsschiene, in der oder in die das/die Werkzeuge verschoben werden, kann eine Werkzeughalterung einer Biegepresse, insbesondere Abkantpresse sein. Alternativ kann die Führungsschiene eine Führungsschiene oder Werkzeughalterung eines (Biege-)Werkzeugspeichers sein.

Der Kanal kann innerhalb der Schub- und Zugübertragungseinrichtung, z.B. im Inneren der Kettenglieder, verlaufen, oder an die Schub- und Zugübertragungseinrichtung angebaut sein. Der Verlauf des Kanals ist ebenso flexibel wie die Versorgungsleitung (Kabel, Rohr(e), etc.).

Es ist nicht erforderlich, dass der Kanal geschlossen ist. Es ist ausreichend, wenn der Kanal dazu ausgebildet ist, die Versorgungsleitung aufzunehmen oder zu umschließen oder zu führen oder auch nur zu halten. Der Begriff Kanal ist daher im Sinne vorliegender Anmeldung breit zu verstehen.

Die Erfindung zeichnet sich dadurch aus, dass die Versorgungsleitung zwischen dem ersten Abschnitt und dem zweiten Abschnitt, vorzugsweise im Bereich der Austrittsstelle, durch die Längsöffnung aus der Führung der Aufnahme austritt. Die Versorgungsleitung tritt hier nicht nur (an der Austrittsstelle) aus dem Kanal aus, sondern auch (durch die Längsöffnung) aus der Führung der Aufnahme. Dies ist insbesondere dann vorteilhaft, wenn sich der Kanal - im Querschnitt gesehen - vollständig in der Führung befindet. Der Übergangsbereich (der Versorgungsleitung) zwischen erstem und zweiten Abschnitt bewegt sich in der Längsöffnung entlang der Führung mit, wenn die Schub- und Zugübertragungseinrichtung in die Aufnahme eingefahren wird bzw. aus der Aufnahme ausgefahren wird. Mit anderen Worten: die Versorgungsleitung wird in einer Richtung quer zur Führungsrichtung (durch die Längsöffnung) aus der Führung herausgeführt. An diesen Übergangsbereich schließt der - außerhalb des Kanals und der Führung verlaufende - zweite Abschnitt an.

Eine bevorzugte Ausführungsform zeichnet sich dadurch aus, dass die Austrittstelle in dem - sich in der Führung der Aufnahme befindlichen - Endbereich der Schub- und Zugübertragungseinrichtung angeordnet ist. Da der Endbereich im normalen Betrieb üblicherweise nicht aus der Führung der Aufnahme gelangt, bleibt auch die austretende Versorgungsleitung immer im Bereich der Aufnahme.

Eine bevorzugte Ausführungsform zeichnet sich dadurch aus, dass der zweite Abschnitt hängend angeordnet ist, wobei vorzugsweise der zweite Abschnitt zumindest einen, vorzugsweise zumindest zwei, Führungsabschnitt(e) der (vorzugsweise spiralartig verlaufenden) Führung kreuzt und/oder wobei vorzugsweise der zweite Abschnitt in einer Ebene verläuft, die im Wesentlichen parallel zur Ebene steht, in der die Führung verläuft. Die hängende Anordnung des zweiten Abschnittes erlaubt es, dass der außerhalb der Führung der Aufnahme verlaufende Versorgungleitungsabschnitt seinen Verlauf an die Position der Schub- und Zugübertragungseinrichtung bzw. an die Position der Austrittstelle anpassen kann. Der zweite Abschnitt ist bevorzugt länger als der längst mögliche Abstand zwischen der (in der Führung befindlichen) Austrittsstelle und der Versorgungseinrichtung (Steuerung, elektrische Versorgungseinrichtung und/oder Druck-/Unterdruckversorgungseinrichtung), mit der die Versorgungsleitung verbunden ist.

Eine bevorzugte Ausführungsform zeichnet sich dadurch aus, dass der zweite Abschnitt der Versorgungsleitung - in zumindest einer Position der Schub- und Zugübertragungseinrichtung - zumindest teilweise, vorzugsweise entlang zumindest der Hälfte seiner Länge, auf einer Auflagefläche aufliegt.

Eine bevorzugte Ausführungsform zeichnet sich dadurch aus, dass sich die Führung über die Längsöffnung in eine Richtung öffnet, die quer, vorzugsweise im Wesentlichen senkrecht, zu der Ebene steht, in der die Führung verläuft. Die Versorgungsleitung tritt somit seitlich aus der Führung der Aufnahme hinaus.

Eine bevorzugte Ausführungsform zeichnet sich dadurch aus, dass die Ebene, in der die (vorzugsweise spiralartig verlaufende) Führung verläuft, im Wesentlichen vertikal steht. Die ermöglicht eine platzsparende Unterbring der Schub- und Zugübertragungseinrichtung in ihrer Parkposition.

Eine bevorzugte Ausführungsform zeichnet sich dadurch aus, dass die Führung zumindest einen Abschnitt mit gekrümmtem Verlauf aufweist, wobei vorzugsweise die Führung einen weiteren Abschnitt mit geradem, vorzugsweise horizontalem, Verlauf aufweist, wobei vorzugsweise die Länge des weiteren Abschnitts mit geradem Verlauf zumindest 1/3, vorzugsweise zumindest 1/2, der Gesamtlänge der Führung beträgt. Zumindest ein gekrümmter Führungsabschnitt ist hinsichtlich des benötigten Platzbedarfes von Vorteil. Das Vorsehen auch eines geraden Abschnittes reduziert die zum Einfahren der Schub- und Zugübertragungseinrichtung erforderliche Kraft, da der Widerstand bzw. die Reibung bei geraden Führungen bzw. Führungsabschnitten geringer ist als bei ausschließlich gekrümmten Führungen.

Eine bevorzugte Ausführungsform zeichnet sich dadurch aus, dass die Führung einen Abschnitt mit spiralartigem Verlauf aufweist. Eine spiralartig verlaufende Führung ermöglicht es, den Platzbedarf gering zu halten, da die Schub- und Zugübertragungseinrichtung auf engem Raum eingefahren werden kann. Gleichzeitig kommt das erfindungsgemäße Prinzip hier besonders zur Geltung, da auch bei spiralartigen Führungen ein undefiniertes Verwickeln bzw. Verdrehen verhindert wird.

Eine bevorzugte Ausführungsform zeichnet sich dadurch aus, dass die Werkzeug-Transfervorrichtung, vorzugsweise im Bereich der Austrittsöffnung, eine sich mit der Schub- und Zugübertragungseinrichtung mitbewegende, vorzugsweise mit der Schub- und Zugübertragungseinrichtung verbundene, Aufrolleinrichtung zum Aufrollen der Versorgungsleitung aufweist. Insbesondere bei einer gebogenen oder spiralartigen Bahn ist die Versorgungsleitung Torsionskräften ausgesetzt und kann sich in undefinierter Weise verdrehen. Durch die Aufrolleinrichtung wird die Möglichkeit geschaffen, dass die Versorgungsleitung in definierter Weise aufgerollt wird, wenn das Ende der Schub- und Zugübertragungseinrichtung gekrümmt oder spiralförmig eingefahren wird. Die Aufrolleinrichtung bewegt sich mit der Schub- und Zugübertragungseinrichtung mit. Die Aufrolleinrichtung kann z.B. mit einem Kettenglied, vorzugsweise dem letzten Kettenglied, der Schub- und Zugübertragungseinrichtung verbunden bzw. an einem solchen befestigt sein. Die Aufrolleinrichtung ist vorzugsweise außerhalb der Führung der Aufnahme angeordnet.

Eine bevorzugte Ausführungsform zeichnet sich dadurch aus, dass die Aufrolleinrichtung in Form einer Trommel oder in Form einer Rolle oder in Form einer Spule oder in Form einer Nabe ausgebildet ist.

Eine bevorzugte Ausführungsform zeichnet sich dadurch aus, dass die Versorgungsleitung zwischen dem ersten Abschnitt und dem zweiten Abschnitt eine Drehverbindung aufweist, vorzugsweise in Form einer Gleitringverbindung. Dies stellt eine zur Aufrolleinrichtung alternative Ausführungsform dar, die ein Verdrehen der Versorgungsleitung, insbesondere deren zweiten Abschnitts, verhindert. Es kann hier der zweite Abschnitt derart an den ersten Abschnitt angebunden sein, dass der zweite Abschnitt kontrolliert gegen den ersten Abschnitt verdrehbar ist. Die Drehverbindung definiert nicht nur die Stelle an der ein gegeneinander Verdrehen stattfindet, sondern bestimmt aufgrund ihrer Ausgestaltung das Ausmaß der Verdrehung.

Eine bevorzugte Ausführungsform zeichnet sich dadurch aus, dass die Transfervorrichtung einen Antrieb zum Antreiben der Schub- und Zugübertragungseinrichtung aufweist, wobei vorzugsweise der Antrieb außerhalb der Aufnahme angeordnet ist.

Eine bevorzugte Ausführungsform zeichnet sich dadurch aus, dass die Versorgungsleitung zumindest ein Kabel und/oder zumindest eine Druck- und/oder Unterdruckleitung umfasst, und/oder dass das werkzeugferne Ende der Versorgungsleitung an eine Versorgungseinrichtung, vorzugsweise an eine elektrische Versorgungseinrichtung und/oder an eine Druck- und/oder Unterdruck-Versorgungseinrichtung, angeschlossen ist. Die Versorgungseinrichtung kann eine Steuerung, eine elektrische Strom- und/oder Spannungsquelle, eine Druck- oder Unterdruckversorgungseinrichtung sein.

Die Erfindung zeichnet sich dadurch aus, dass die Schub- und Zugübertragungseinrichtung im Bereich ihres werkzeugseitigen Endes eine an die Versorgungsleitung angebundene Ankopplungseinrichtung zum Ankoppeln eines Werkzeuges an die Schub- und Zugübertragungseinrichtung und/oder einen an die Versorgungsleitung angebundenen Effektor zum Einwirken auf ein Werkzeug, insbesondere eine Einstelleinrichtung zur Durchführung einer Werkzeugeinstellung, aufweist. Die Ankopplungseinrichtung ist zwischen einem kuppelnden Zustand und einem gelösten Zustand betätigbar. Mit angekoppeltem Werkzeug kann dieses durch Bewegen der Schub- und Zugübertragungseinrichtung entlang der Führungsschiene bzw. entlang der Führung verfahren werden.

Eine bevorzugte Ausführungsform zeichnet sich dadurch aus, dass die Schub- und Zugübertragungseinrichtung durch eine Kette aus einer Vielzahl von miteinander verbundenen Kettengliedern gebildet ist, wobei vorzugsweise der Kanal für die Versorgungsleitung durch die Kettenglieder hindurch verläuft.

Eine bevorzugte Ausführungsform zeichnet sich dadurch aus, dass die Austrittstelle, an der die Versorgungsleitung aus dem Kanal austritt, in dem - das werkzeugferne Ende der Schub- und Zugübertragungseinrichtung bildenden - Kettenglied ausgebildet ist.

Eine bevorzugte Ausführungsform zeichnet sich dadurch aus, dass die Schub- und Zugübertragungseinrichtung in ihrem Querschnitt vollständig innerhalb der Führung der Aufnahme aufgenommen ist. Dadurch ist die Schub- und Zugübertragungseinrichtung sowie der darin verlaufende Kanal für die Versorgungsleitung bestmöglich geschützt.

Eine bevorzugte Ausführungsform zeichnet sich dadurch aus, dass die Aufnahme durch einen plattenförmigen Körper gebildet wird und die (vorzugsweise spiralartig verlaufende) Führung, vorzugsweise zur Gänze, innerhalb des plattenförmigen Körpers verläuft, wobei vorzugsweise die Längsöffnung mit der Oberfläche des plattenförmigen Körpers fluchtet. Dies stellt eine platzsparende und kostengünstige Lösung dar.

Eine bevorzugte Ausführungsform zeichnet sich dadurch aus, dass die Aufnahme eine erste, vorzugsweise spiralartig verlaufende, Führung und eine zweite, vorzugsweise spiralartig verlaufende, Führung aufweist, wobei der ersten Führung eine erste längliche Schub- und Zugübertragungseinrichtung, vorzugsweise zum Verschieben von Oberwerkzeugen, und der zweiten Führung eine zweite längliche Schub- und Zugübertragungseinrichtung, vorzugsweise zum Verschieben von Unterwerkzeugen, zugeordnet ist. D.h. die erste längliche Schub- und Zugübertragungseinrichtung ist in die erste Führung und die zweite längliche Schub- und Zugübertragungseinrichtung ist in die zweite Führung einfahrbar.

Eine bevorzugte Ausführungsform zeichnet sich dadurch aus, dass der Eintritt in die erste Führung oberhalb des Eintritts in die zweite Führung angeordnet ist. Dies entspricht der Anordnung bzw. den Niveaus wie sie z.B. auch in einer Biegepresse für Oberwerkzeuge und Unterwerkzeuge vorherrschen.

Eine bevorzugte Ausführungsform zeichnet sich dadurch aus, dass die erste Führung und die zweite Führung in einem gemeinsamen, vorzugsweise plattenförmigen, Aufnahmekörper ausgebildet sind, wobei sich die Längsöffnung der ersten Führung an einer ersten Seite des Aufnahmekörpers und die Längsöffnung der zweiten Führung an einer zweiten, der ersten Seite gegenüberliegenden Seite des Aufnahmekörpers befinden. Durch das Vorsehen zweier Führungen in einem gemeinsamen Aufnahmekörper kann eine besonders platzsparende Lösung bereitgestellt werden.

Eine bevorzugte Ausführungsform zeichnet sich dadurch aus, dass die Windungen der ersten Führung zwischen den Windungen der zweiten Führung verlaufen, und/oder dass die Windungen der ersten Führung und die Windungen der zweiten Führung zumindest teilweise miteinander überlappen. Auf diese Weise kann der Raum noch besser ausgenutzt werden und können die Abmessungen des plattenförmigen Körpers, insbesondere dessen Dicke, geringgehalten werden.

Die Aufgabe wird auch gelöst mit einer Bearbeitungsmaschine und/oder einer Werkzeug-Beschickungsvorrichtung für eine Bearbeitungsmaschine, insbesondere für eine Biegepresse, mit einer erfindungsgemäßen Werkzeug-Transfervorrichtung zum Verschieben eines oder mehrerer Werkzeuge, insbesondere Biegewerkzeuge, in einer Führungsschiene, insbesondere zum Transferieren eines Werkzeuges in oder aus der Bearbeitungsmaschine und/oder aus oder in einen Werkzeugspeicher. Bei einer Biegepresse können die Werkzeughalterung selbst als Führungsschienen ausgebildet sein, sodass die Schub- und Zugübertragungseinrichtung auch in die Werkzeughalterung der Biegepresse einfahren kann und dort Werkzeuge deponieren oder abholen kann. Die Werkzeuge, insbesondere Biegewerkzeuge weisen einen Halteabschnitt, der in die Führungsschiene (bzw. Werkzeughalterung) ragt, und einen Formabschnitt auf. Die Schub- und Zugübertragungseinrichtung ist vorzugsweise in derselben Führungsschiene geführt, in der auch die Werkzeuge eingesetzt sind.

Eine bevorzugte Ausführungsform zeichnet sich dadurch aus, dass die Beschickungsvorrichtung einen Werkzeugspeicher mit einer Vielzahl an Speicherplätzen für Werkzeuge, insbesondere Biegewerkzeuge, umfasst.

Die Aufgabe wird auch gelöst mit einer Anordnung einer Bearbeitungsmaschine und/oder einer Werkzeug-Beschickungsvorrichtung, insbesondere nach einer der oben genannten Ausführungsformen, und einer erfindungsgemäßen Werkzeug-Transfervorrichtung zum Verschieben eines oder mehrerer Werkzeuge, insbesondere Biegewerkzeuge, in einer Führungsschiene, insbesondere zum Transferieren eines Werkzeuges in oder aus der Bearbeitungsmaschine und/oder aus oder in einen Werkzeugspeicher.

Vorzugsweise verläuft ein Abschnitt der Führung oberhalb der Bearbeitungsmaschine und/oder im oberen Teil der Werkzeug-Beschickungsvorrichtung. Vorzugsweise verläuft ein Abschnitt der Führung von unten nach oben. Durch diese Maßnahme wird die Schub- und Zugübertragungseinrichtung in einen Bereich (oberhalb der Bearbeitungsmaschine bzw. in den oberen Teil der Werkzeug-Beschickungsvorrichtung) bewegt, der ansonsten ohnedies ungenutzt ist. Auch diese Ausführungsform ist somit hinsichtlich des Platzbedarfes vorteilhaft.

Die Aufgabe wird auch gelöst mit einem Verfahren zum Verschieben eines oder mehrerer Werkzeuge, insbesondere Biegewerkzeuge, in einer Führungsschiene, insbesondere zum Transferieren eines Werkzeuges in oder aus einer Bearbeitungsmaschine und/oder aus oder in einen Werkzeugspeicher, dadurch gekennzeichnet, dass das Verschieben eines oder mehrerer Werkzeuge mit einer Werkzeug-Transfervorrichtung nach einem der Ansprüche 1 bis 23 durchgeführt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Werkzeugtransfervorrichtung, die an einen Biegewerkzeugspeicher und an eine Biegepresse angebunden ist;
- Fig. 2: eine Aufrolleinrichtung am werkzeugfernen Ende der Schub- und Zugübertragungseinrichtung;
- Fig. 3: ein Kettenglied für eine als Kette ausgebildete Schub- und Zugübertragungseinrichtung;
- Fig. 4: eine Aufnahme in Form eines plattenförmigen Aufnahmekörpers mit einer ersten Führung und einer zweiten Führung;
- Fig. 5: die Austrittstelle aus dem Kanal und eine Aufrolleinrichtung für die Versorgungsleitung;
- Fig. 6: eine Dreheinrichtung zwischen dem ersten Abschnitt und dem zweiten Abschnitt der Versorgungsleitung;
- Fig. 7: eine Ausführungsform einer Werkzeugtransfervorrichtung in einer Anordnung mit einer Biegepresse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

Auch wenn die Erfindung nachfolgend an einer Biegepresse, insbesondere Abkantpresse, beschrieben wird, ist die erfindungsgemäße Lösung gleichermaßen auf andere Bearbeitungsmaschinen, in und/oder zu denen Werkzeuge über Führungsschienen bewegt werden können, übertragbar.

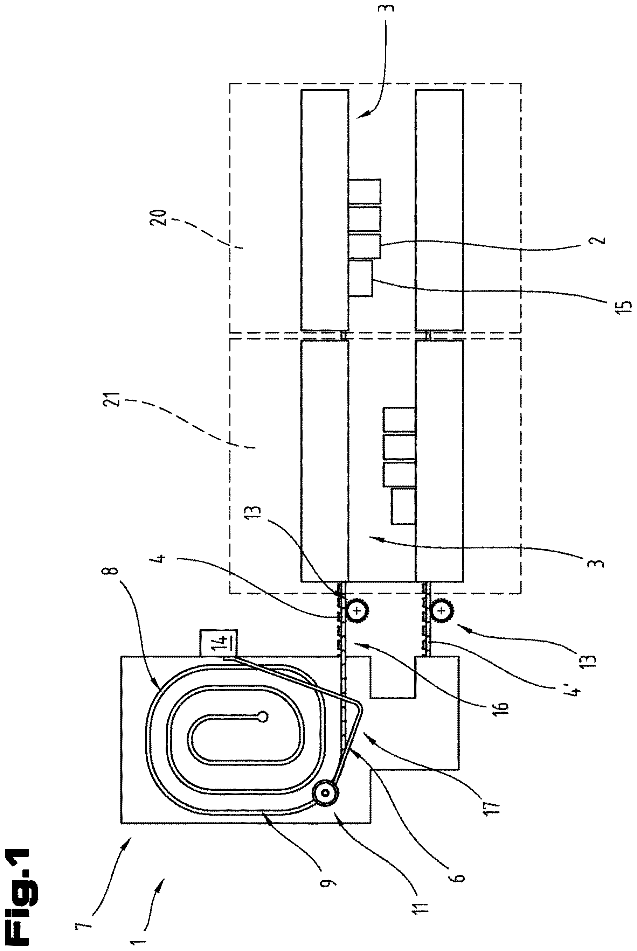

Fig. 1 zeigt eine Werkzeug-Transfervorrichtung 1 zum Verschieben eines oder mehrerer Werkzeuge 2, insbesondere Biegewerkzeuge, in Führungsschienen 3. In der dargestellten Ausführungsform ist die Transfervorrichtung 1 an einen Biegewerkzeugspeicher 21 und an eine Biegepresse 20 angebunden. Ein erstes längliches Schub- und Zugübertragungseinrichtung 4 dient zum Verschieben von Oberwerkzeugen 2 (insbesondere Stempelwerkzeugen). Ein zweites längliches Schub- und Zugübertragungseinrichtung 4' dient zum Verschieben von Unterwerkzeugen 2 (insbesondere Matrizenwerkzeugen). Die hier jeweils in Form einer Kette ausgebildeten Schub- und Zugübertragungseinrichtungen 4, 4' können in den Führungsschienen 3 durch den Werkzeugspeicher 21 und durch die Biegepresse 20 verfahren werden, um Werkzeuge mit sich mitzubewegen. Es sei an dieser Stelle bemerkt, dass die Anordnung aus Biegepresse 20, Werkzeugspeicher 21und Transfervorrichtung 1 grundsätzlich auch eine andere sein kann.

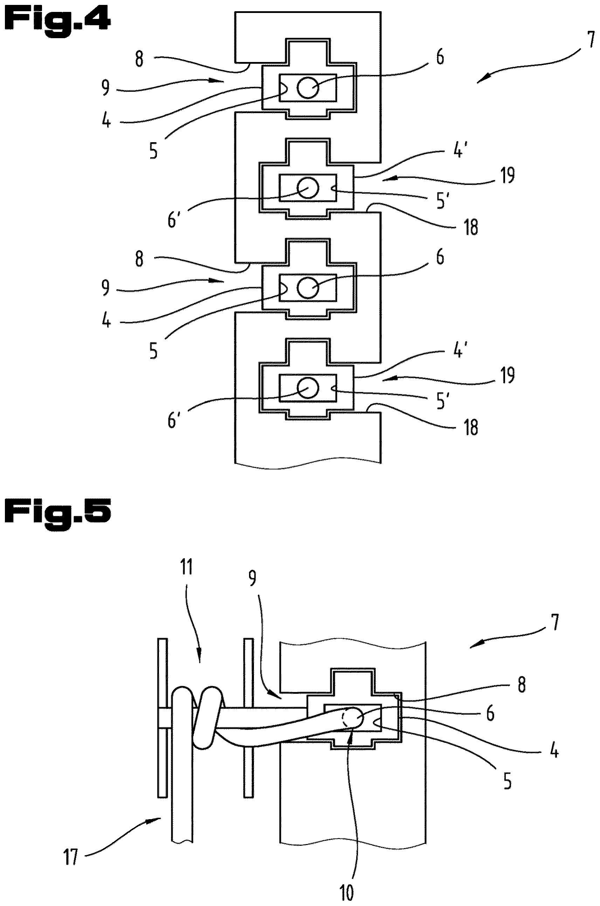

In oder an der/den Schub- und Zugübertragungseinrichtungen 4, 4' ist jeweils ein Kanal 5, 5' für eine Versorgungsleitung 6, 6' ausgebildet (siehe auch Fig. 4).

Die Transfervorrichtung umfasst weiters eine Aufnahme 7, welche zumindest eine spiralartig verlaufende Führung 8 (hier: zwei Führungen 8, 18 für Ober- und Unterwerkzeuge) zum Einfahren der Schub- und Zugübertragungseinrichtung(en) 4, 4' aufweist. Die spiralartig verlaufende Führung 8 (bzw. 18) weist eine sich entlang des Führungsverlaufs erstreckende Längsöffnung 9 (bzw. 19) auf. Die Längsöffnung ist entlang der Führung durchgehend ausgebildet und ermöglicht die seitliche Zugänglichkeit zum Inneren der Führung.

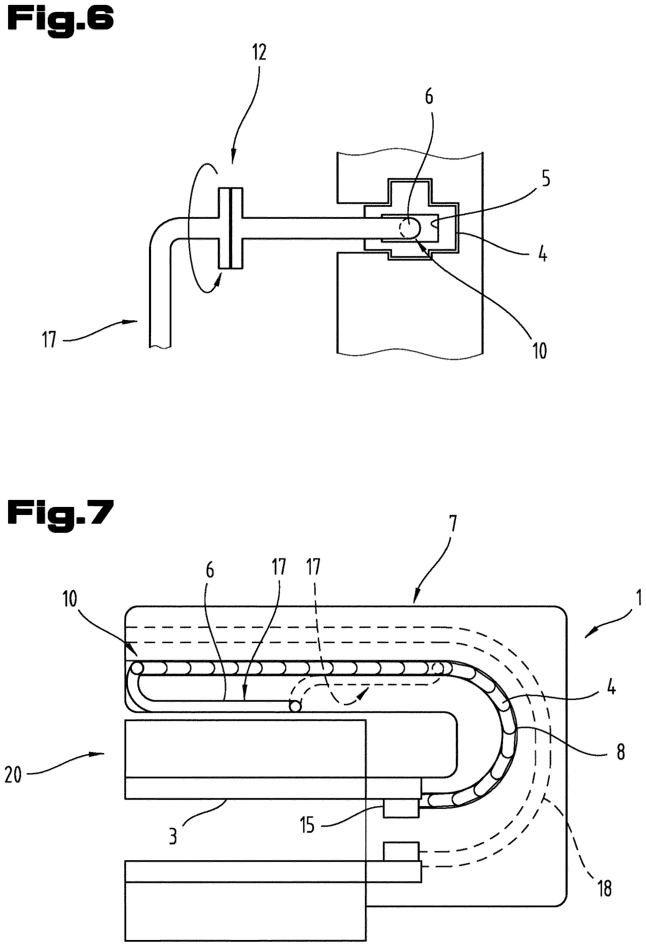

An dieser Stelle sie bemerkt, dass die Erfindung nicht auf spiralartige Führungen beschränkt ist; vielmehr ist das erfindungsgemäße Prinzip gleichermaßen auch auf gerade oder auf andere Weise gebogene (oder solche geraden/gebogenen Abschnitte aufweisende) Führungen anwendbar (siehe z.B. Fig. 7).

In dem Kanal 5 bzw. 5' verläuft eine Versorgungsleitung 6 bzw. 6'. Ein erster Abschnitt 16 einer Versorgungsleitung 6, 6' verläuft in dem Kanal 5, 5' der Schub- und Zugübertragungseinrichtung 4 (bzw. 4'). Ein zweiter Abschnitt 17 der Versorgungsleitung 6 (bzw. 6') verläuft außerhalb der Schub- und Zugübertragungseinrichtung 4 und außerhalb der Führung 8.

Die Versorgungsleitung 6 tritt zwischen dem ersten Abschnitt 16 und dem zweiten Abschnitt 17 an einer Austrittsstelle 10 aus dem Kanal 5 aus. Die Austrittsstelle 10 ist in einem - sich in der Führung 8 der Aufnahme 7 befindlichen - Bereich der Schub- und Zugübertragungseinrichtung 4 angeordnet.

In der dargestellten Ausführungsform (siehe insb. Fig. 1, 4 und 5) tritt die Versorgungsleitung 6 zwischen dem ersten Abschnitt 16 und dem zweiten Abschnitt 17 im Bereich der Austrittsstelle 10 durch die Längsöffnung 9 seitlich aus der Führung 8 aus. Die Führung 8 öffnet sich über die Längsöffnung 9 in eine Richtung, die quer, vorzugsweise im Wesentlichen senkrecht, zu der Ebene steht, in der die spiralartig verlaufende Führung 8 verläuft.

Die Austrittstelle 10 ist dabei in dem - sich in der Führung 8 befindlichen - Endbereich der Schub- und Zugübertragungseinrichtung 4 angeordnet.

Wie aus Fig. 1 zu sehen kann der zweite Abschnitt 17 einer Versorgungsleitung 6, 6' hängend angeordnet sein. Der zweite Abschnitt 17 kann dabei zumindest einen, vorzugsweise zumindest zwei, Führungsabschnitt(e) der spiralartig verlaufenden Führung 8 kreuzen und/oder in einer Ebene verlaufen, die im Wesentlichen parallel zur Ebene steht, in der die spiralartig verlaufende Führung 8 verläuft.

Die Aufnahme 7 bzw. die Ebene, in der die spiralartig verlaufende Führung 8 verläuft, steht bevorzugt im Wesentlichen vertikal.

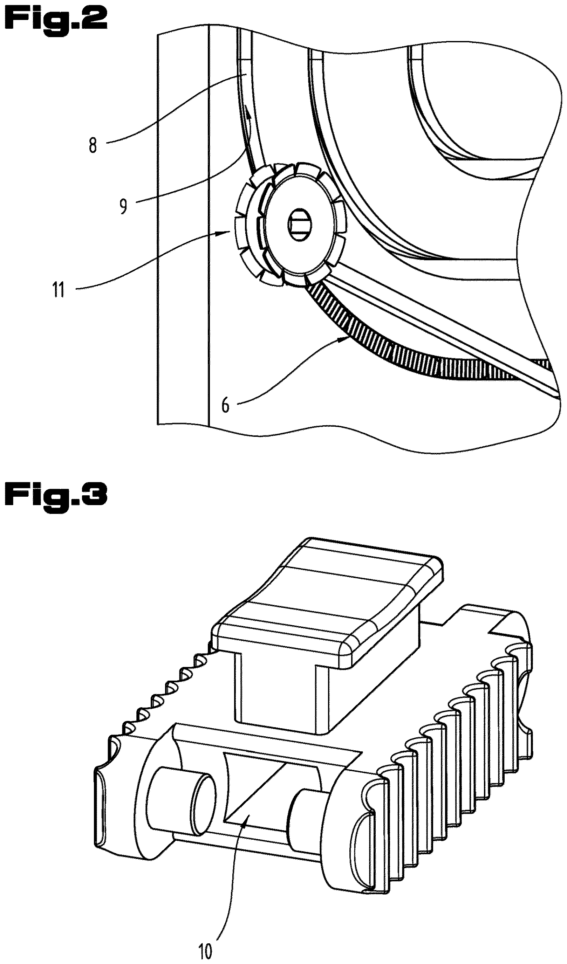

In der Ausführungsform der Fig. 1, 2 und 4 weist die Werkzeug-Transfervorrichtung 1 im Bereich der Austrittsöffnung 10 eine Aufrolleinrichtung 11 zum Aufrollen der Versorgungsleitung 6 auf. Die Aufrolleinrichtung 11 bewegt sich mit der Schub- und Zugübertragungseinrichtung 4 mit. In der dargestellten Ausführungsform ist die Aufrolleinrichtung 11 mit der Schub- und Zugübertragungseinrichtung 4 verbunden bzw. an dieser befestigt. Die Aufrolleinrichtung 11 kann in Form einer Trommel (siehe Fig. 2 und 4) oder in Form einer Rolle oder in Form einer Spule oder in Form einer Nabe ausgebildet sein.

In einer alternativen, in Fig. 6 dargestellten Variante kann die Versorgungsleitung 6 zwischen dem ersten Abschnitt 16 und dem zweiten Abschnitt 17 eine Drehverbindung 12 aufweisen, vorzugsweise in Form einer Gleitringverbindung. Dadurch kann ebenfalls ein unkontrolliertes Verdrillen der Versorgungsleitung verhindert werden.

Die Versorgungsleitung 6 kann z.B. ein elektrisches Kabel und/oder eine Druck- und/oder Unterdruckleitung umfassen. Das werkzeugferne Ende der Versorgungsleitung 6 ist dabei an eine Versorgungseinrichtung 14 (Fig. 1), z.B. eine Steuereinrichtung, eine elektrische Versorgungseinrichtung und/oder an eine Druck- und/oder Unterdruck-Versorgungseinrichtung, angeschlossen.

Die Schub- und Zugübertragungseinrichtung 4 weist im Bereich ihres werkzeugseitigen Endes eine an die Versorgungsleitung 6 angebundene Ankopplungseinrichtung 15 zum Ankoppeln eines Werkzeuges 2 an die Schub- und Zugübertragungseinrichtung 4 auf. Ebenso könnte ein an die Versorgungsleitung 6 angebundenen Effektor zum Einwirken auf ein Werkzeug 2, insbesondere eine Einstelleinrichtung zur Durchführung einer Werkzeugeinstellung (z.B. Matrizenweite) vorgesehen sein.

Aus Fig. 1 ist schematisch dargestellt, dass die Transfervorrichtung 1 einen Antrieb 13 zum Antreiben der Schub- und Zugübertragungseinrichtung 4 aufweist. In der dargestellten Ausführungsform ist dieser außerhalb der Aufnahme 7 angeordnet.

Die Schub- und Zugübertragungseinrichtung 4 ist bevorzugt durch eine Kette aus einer Vielzahl von miteinander verbundenen Kettengliedern gebildet. Fig. 3 zeigt ein Beispiel eines solchen Kettengliedes. Im Inneren des Kettengliedes ist der Kanal für die Versorgungsleitung zu sehen. Die Austrittstelle 10, an der die Versorgungsleitung 6 aus dem Kanal 5 austritt, ist bevorzugt in dem - das werkzeugferne Ende der Schub- und Zugübertragungseinrichtung 4 bildenden - Kettenglied ausgebildet.

Wie aus den Fig. 4 und 5 zu sehen ist die Schub- und Zugübertragungseinrichtung 4 in ihrem Querschnitt bevorzugt vollständig innerhalb der Führung 8 der Aufnahme 7 aufgenommen.

Die Aufnahme 7 kann - wie aus den Fig. 1 und 4 hervorgeht - durch einen platten-förmigen Körper gebildet sein. Die spiralartige Führung 8 verläuft, vorzugsweise zur Gänze, innerhalb des plattenförmigen Körpers. Die Längsöffnung 9 kann dabei mit der Oberfläche des plattenförmigen Körpers fluchten.

In der dargestellten Ausführungsform (Fig. 1 und 4) weist die Aufnahme 7 eine erste spiralartig verlaufende Führung 8 und eine zweite spiralartig verlaufende Führung 18 auf, wobei der ersten Führung 8 eine erste längliche Schub- und Zugübertragungseinrichtung 4 (hier zum Verschieben von Oberwerkzeugen) und der zweiten Führung 18 eine zweite längliche Schub-und Zugübertragungseinrichtung 4' (hier zum Verschieben von Unterwerkzeugen) zugeordnet ist.

Der Eintritt (von dem Werkzeugspeicher 21 oder von der Bearbeitungsmaschine 20 kommend) in die erste Führung 8 ist dabei oberhalb des Eintritts in die zweite Führung 18 angeordnet.

Wie aus Fig. 1 und 4 ersichtlich sind die erste Führung 8 und die zweite Führung 18 in einem gemeinsamen, vorzugsweise plattenförmigen, Aufnahmekörper ausgebildet. Die Längsöffnung 9 der ersten Führung 8 befindet sich an einer ersten Seite des Aufnahmekörpers. Die Längsöffnung 19 der zweiten Führung 18 befindet sich an einer zweiten, der ersten Seite gegenüberliegenden Seite des Aufnahmekörpers.

Wie aus der Querschnittsdarstellung der Fig. 4 ersichtlich können die Windungen der ersten Führung 8 zwischen den Windungen der zweiten Führung 18 verlaufen. Weiters können die Windungen der ersten Führung 8 und die Windungen der zweiten Führung 18 zumindest teilweise miteinander überlappen.

Fig. 7 zeigt eine alternative Ausführungsform einer Werkzeug-Transfervorrichtung 1. Diese bildet zusammen mit einer Bearbeitungsmaschine 20 (alternativ: mit einer Werkzeug-Beschickungsvorrichtung) eine Anordnung.

Dabei verläuft zumindest ein Abschnitt der Führung 8 oberhalb der Bearbeitungsmaschine 20 (bzw. alternativ: im oberen Teil der Werkzeug-Beschickungsvorrichtung). Ein Abschnitt der Führungen 8, 18 verläuft von unten nach oben, d.h. ausgehend von den Führungsschienen 3 der Bearbeitungsmaschine 20 (hier eine Biegepresse) nach oben.

Dabei kann die Führung 8 bzw. 18 zumindest einen Abschnitt mit gekrümmtem Verlauf und einen weiteren Abschnitt mit geradem (hier: horizontalem) Verlauf aufweisen, wobei vorzugsweise die Länge des weiteren Abschnitts mit geradem Verlauf zumindest 1/3, vorzugsweise zumindest 1/2, der Gesamtlänge der Führung 8 beträgt. Die Führungen 8, 18 öffnen sich zu verschiedenen Seiten hin, ähnlich wie in Fig 4 dargestellt (weswegen die zweite Führung 18 nur strichliert dargestellt ist). Die Versorgungsleitung 6 wird dabei mit ihrem zweiten Abschnitt 17 auf einer Auflagefläche auf. Fig. 7 zeigt die Versorgungsleitung 6 (bzw. deren zweiten Abschnitt 17) bei voll eingefahrenem Zustand der Schub- und Zugübertragungseinrichtung 4. Die Lage des zweiten Abschnittes 17 der Versorgungsleitung 6 im ausgefahrenen Zustand der Schub- und Zugübertragungseinrichtung 4 ist mit strichlierten Linien dargestellt.

Die Erfindung betrifft auch eine Werkzeug-Beschickungsvorrichtung für eine Bearbeitungsmaschine 20 (hier: eine Biegepresse) mit einer Werkzeug-Transfervorrichtung 1 zum Verschieben eines oder mehrerer Werkzeuge 2, insbesondere Biegewerkzeuge, in einer Führungsschiene 3. Dies dient insbesondere zum Transferieren eines Werkzeuges 2 in oder aus der Bearbeitungsmaschine 20 und/oder aus oder in einen Werkzeugspeicher 21. Der Werkzeugspeicher 21 kann dabei in der Beschickungsvorrichtung integriert sein. Der Werkzeugspeicher 21 umfasst eine Vielzahl an Speicherplätzen für Werkzeuge 2.

Schließlich betrifft die Erfindung auch ein Verfahren zum Verschieben eines oder mehrerer Werkzeuge 2, insbesondere Biegewerkzeuge, in einer Führungsschiene 3, insbesondere zum Transferieren eines Werkzeuges 2 in oder aus einer Bearbeitungsmaschine 20 und/oder aus oder in einen Werkzeugspeicher 21 mit einer Werkzeug-Transfervorrichtung 1 (siehe Fig. 1).

### Bezugszeichenaufstellung

- 1: Werkzeug-Transfervorrichtung
- 2: Werkzeug
- 3: Führungsschiene
- 4, 4': Schub- und Zugübertragungseinrichtung
- 5, 5': Kanal
- 6, 6': Versorgungsleitung
- 7: Aufnahme
- 8: Führung
- 9: Längsöffnung
- 10: Austrittsstelle
- 11: Aufrolleinrichtung
- 12: Drehverbindung
- 13: Antrieb
- 14: Versorgungseinrichtung
- 15: Ankopplungseinrichtung
- 16: erster Abschnitt
- 17: zweiter Abschnitt
- 18: zweite Führung
- 19: Längsöffnung
- 20: Bearbeitungsmaschine
- 21: Werkzeugspeicher

## Patentansprüche

1. Werkzeug-Transfervorrichtung (1) zum Verschieben eines oder mehrerer Werkzeuge (2), insbesondere Biegewerkzeuge, in einer Führungsschiene (3), umfassend:
- zumindest eine längliche Schub- und Zugübertragungseinrichtung (4, 4') zum Verschieben des/der Werkzeuge(s) (2), wobei die Schub- und Zugübertragungseinrichtung (4, 4') ein werkzeugseitiges Ende und ein werkzeugfernes Ende aufweist und wobei in oder an der Schub- und Zugübertragungseinrichtung (4, 4') ein Kanal (5, 5') für eine Versorgungsleitung (6, 6') ausgebildet ist,
- eine Aufnahme (7), welche zumindest eine, vorzugsweise spiralartig verlaufende, Führung (8, 18) zum Einfahren der Schub- und Zugübertragungseinrichtung (4, 4') aufweist,
- zumindest eine Versorgungsleitung (6, 6'), wobei ein erster Abschnitt (16) der Versorgungsleitung (6, 6') in dem Kanal (5, 5') der Schub- und Zugübertragungseinrichtung (4, 4') verläuft,
**dadurch gekennzeichnet,**
**dass** die Führung (8, 18) eine sich entlang des Führungsverlaufs erstreckende Längsöffnung (9, 19) aufweist und
**dass** ein zweiter Abschnitt (17) der Versorgungsleitung (6, 6') außerhalb der Schub- und Zugübertragungseinrichtung (4, 4') und außerhalb der Führung (8, 18) der Aufnahme (7) verläuft und
**dass** die Versorgungsleitung (6, 6') zwischen dem ersten Abschnitt (16) und dem zweiten Abschnitt (17) an einer Austrittsstelle (10), die in einem - sich in der Führung (8, 18) der Aufnahme (7) befindlichen - Bereich der Schub- und Zugübertragungseinrichtung (4, 4`) angeordnet ist, aus dem Kanal (5, 5') austritt und
**dass** die Versorgungsleitung (6) zwischen dem ersten Abschnitt (16) und dem zweiten Abschnitt (17), vorzugsweise im Bereich der Austrittsstelle (10), durch die Längsöffnung (9) aus der Führung (8) der Aufnahme (7) austritt und
**dass** die Schub- und Zugübertragungseinrichtung (4) im Bereich ihres werkzeugseitigen Endes eine an die Versorgungsleitung (6) angebundene Ankopplungseinrichtung (15) zum Ankoppeln eines Werkzeuges (2) an die Schub- und Zugübertragungseinrichtung (4) und/oder einen an die Versorgungsleitung (6) angebundenen Effektor zum Einwirken auf ein Werkzeug (2), insbesondere eine Einstelleinrichtung zur Durchführung einer Werkzeugeinstellung, aufweist und
**dass** die Austrittsstelle (10), an der die Versorgungsleitung (6, 6') aus dem Kanal (5, 5') austritt, in der Schub- und Zugübertragungseinrichtung (4, 4') im Bereich des werkzeugfernen Endes der Schub- und Zugübertragungseinrichtung (4, 4') ausgebildet ist.

2. Werkzeug-Transfervorrichtung nach Anspruch 1, **dadurch gekennzeichnet, dass** die Versorgungsleitung (6, 6') mit ihrem zweiten Abschnitt (17) zu einer Versorgungseinrichtung (14), vorzugsweise zu einer Steuerung und/oder zu einer elektrischen Versorgungseinrichtung und/oder zu einer Druck- und/oder Unterdruck-Versorgungseinrichtung, geleitet ist.

3. Werkzeug-Transfervorrichtung nach Anspruch 1 oder 2, **dadurch gekennzeichnet, dass** die Austrittstelle (10) in dem - sich in der Führung (8) der Aufnahme (7) befindlichen - Endbereich der Schub- und Zugübertragungseinrichtung (4) angeordnet ist.

4. Werkzeug-Transfervorrichtung nach einem der vorhergehenden Ansprüche, **dadurch gekennzeichnet, dass** der zweite Abschnitt (17) hängend angeordnet ist, wobei vorzugsweise der zweite Abschnitt (17) zumindest einen, vorzugsweise zumindest zwei, Führungsabschnitt(e) der Führung (8) kreuzt und/oder wobei vorzugsweise der zweite Abschnitt (17) in einer Ebene verläuft, die im Wesentlichen parallel zur Ebene steht, in der die Führung (8) verläuft.

5. Werkzeug-Transfervorrichtung nach einem der vorhergehenden Ansprüche, **dadurch gekennzeichnet, dass** der zweite Abschnitt (17) der Versorgungsleitung (6, 6') - in zumindest einer Position der Schub- und Zugübertragungseinrichtung (4, 4`) - zumindest teilweise, vorzugsweise entlang zumindest der Hälfte seiner Länge, auf einer Auflagefläche auf liegt.

6. Werkzeug-Transfervorrichtung nach einem der vorhergehenden Ansprüche, **dadurch gekennzeichnet, dass** sich die Führung (8) über die Längsöffnung (9) in eine Richtung öffnet, die quer, vorzugsweise im Wesentlichen senkrecht, zu der Ebene steht, in der die Führung (8) verläuft.

7. Werkzeug-Transfervorrichtung nach einem der vorhergehenden Ansprüche, **dadurch gekennzeichnet, dass** die Ebene, in der die Führung (8) verläuft, im Wesentlichen vertikal steht.

8. Werkzeug-Transfervorrichtung nach einem der vorhergehenden Ansprüche, **dadurch gekennzeichnet, dass** die Führung (8) zumindest einen Abschnitt mit gekrümmtem Verlauf aufweist, wobei vorzugsweise die Führung (8) einen weiteren Abschnitt mit geradem, vorzugsweise horizontalem, Verlauf aufweist, wobei vorzugsweise die Länge des weiteren Abschnitts mit geradem Verlauf zumindest 1/3, vorzugsweise zumindest 1/2, der Gesamtlänge der Führung (8) beträgt.

9. Werkzeug-Transfervorrichtung nach einem der vorhergehenden Ansprüche, **dadurch gekennzeichnet, dass** die Führung (8) einen Abschnitt mit spiralartigem Verlauf aufweist.

10. Werkzeug-Transfervorrichtung nach einem der vorhergehenden Ansprüche, **dadurch gekennzeichnet, dass** die Werkzeug-Transfervorrichtung (1), vorzugsweise im Bereich der Austrittsöffnung (10), eine sich mit der Schub- und Zugübertragungseinrichtung (4) mitbewegende, vorzugsweise mit der Schub- und Zugübertragungseinrichtung (4) verbundene, Aufrolleinrichtung (11) zum Aufrollen der Versorgungsleitung (6) aufweist.

11. Werkzeug-Transfervorrichtung nach Anspruch 10, **dadurch gekennzeichnet, dass** die Aufrolleinrichtung (11) in Form einer Trommel oder in Form einer Rolle oder in Form einer Spule oder in Form einer Nabe ausgebildet ist.

12. Werkzeug-Transfervorrichtung nach einem der vorhergehenden Ansprüche, **dadurch gekennzeichnet, dass** die Versorgungsleitung (6) zwischen dem ersten Abschnitt (16) und dem zweiten Abschnitt (17) eine Drehverbindung (12) aufweist, vorzugsweise in Form einer Gleitringverbindung.

13. Werkzeug-Transfervorrichtung nach einem der vorhergehenden Ansprüche, **dadurch gekennzeichnet, dass** die Transfervorrichtung (1) einen Antrieb (13) zum Antreiben der Schub- und Zugübertragungseinrichtung (4) aufweist, wobei vorzugsweise der Antrieb (13) außerhalb der Aufnahme (7) angeordnet ist.

14. Werkzeug-Transfervorrichtung nach einem der vorhergehenden Ansprüche, **dadurch gekennzeichnet,**
**dass** die Versorgungsleitung (6) zumindest ein Kabel und/oder zumindest eine Druck- und/oder Unterdruckleitung umfasst.

15. Werkzeug-Transfervorrichtung nach einem der vorhergehenden Ansprüche, **dadurch gekennzeichnet, dass** das werkzeugferne Ende der Versorgungsleitung (6) an eine Versorgungseinrichtung (14), vorzugsweise an eine Steuerung und/oder eine elektrische Versorgungseinrichtung und/oder an eine Druck- und/oder Unterdruck-Versorgungseinrichtung, angeschlossen ist.

16. Werkzeug-Transfervorrichtung nach einem der vorhergehenden Ansprüche, **dadurch gekennzeichnet, dass** die Schub- und Zugübertragungseinrichtung (4) durch eine Kette aus einer Vielzahl von miteinander verbundenen Kettengliedern gebildet ist, wobei vorzugsweise der Kanal (5) für die Versorgungsleitung (6) durch die Kettenglieder hindurch verläuft.

17. Werkzeug-Transfervorrichtung nach Anspruch 16, **dadurch gekennzeichnet, dass** die Austrittstelle (10), an der die Versorgungsleitung (6) aus dem Kanal (5) austritt, in dem - das werkzeugferne Ende der Schub- und Zugübertragungseinrichtung (4) bildenden - Kettenglied ausgebildet ist.

18. Werkzeug-Transfervorrichtung nach einem der vorhergehenden Ansprüche, **dadurch gekennzeichnet, dass** die Schub- und Zugübertragungseinrichtung (4) in ihrem Querschnitt vollständig innerhalb der Führung (8) der Aufnahme (7) aufgenommen ist.

19. Werkzeug-Transfervorrichtung nach einem der vorhergehenden Ansprüche, **dadurch gekennzeichnet, dass** die Aufnahme (7) durch einen plattenförmigen Körper gebildet wird und die Führung (8), vorzugsweise zur Gänze, innerhalb des plattenförmigen Körpers verläuft, wobei vorzugsweise die Längsöffnung (9) mit der Oberfläche des plattenförmigen Körpers fluchtet.

20. Werkzeug-Transfervorrichtung nach einem der vorhergehenden Ansprüche, **dadurch gekennzeichnet, dass** die Aufnahme (7) eine erste, vorzugsweise spiralartig verlaufende, Führung (8) und eine zweite, vorzugsweise spiralartig, verlaufende Führung (18) aufweist, wobei der ersten Führung (8) eine erste längliche Schub- und Zugübertragungseinrichtung (4), vorzugsweise zum Verschieben von Oberwerkzeugen, und der zweiten Führung (18) eine zweite längliche Schub- und Zugübertragungseinrichtung (4'), vorzugsweise zum Verschieben von Unterwerkzeugen, zugeordnet ist.

21. Werkzeug-Transfervorrichtung nach Anspruch 20, **dadurch gekennzeichnet, dass** der Eintritt in die erste Führung (8) oberhalb des Eintritts in die zweite Führung (18) angeordnet ist.

22. Werkzeug-Transfervorrichtung nach Anspruch 20 oder 21, **dadurch gekennzeichnet, dass** die erste Führung (8) und die zweite Führung (18) in einem gemeinsamen, vorzugsweise plattenförmigen, Aufnahmekörper ausgebildet sind, wobei sich die Längsöffnung (9) der ersten Führung (8) an einer ersten Seite des Aufnahmekörpers und die Längsöffnung (19) der zweiten Führung (18) an einer zweiten, der ersten Seite gegenüberliegenden Seite des Aufnahmekörpers befinden.

23. Werkzeug-Transfervorrichtung nach einem der vorhergehenden Ansprüche, **dadurch gekennzeichnet,**
**dass** die Windungen der ersten Führung (8) zwischen den Windungen der zweiten Führung (18) verlaufen, und/oder
**dass** die Windungen der ersten Führung (8) und die Windungen der zweiten Führung (18) zumindest teilweise miteinander überlappen.

24. Bearbeitungsmaschine (20), insbesondere Biegepresse, und/oder Werkzeug-Beschickungsvorrichtung für eine Bearbeitungsmaschine (20), insbesondere für eine Biegepresse, mit einer Werkzeug-Transfervorrichtung (1) zum Verschieben eines oder mehrerer Werkzeuge (2), insbesondere Biegewerkzeuge, in einer Führungsschiene (3), insbesondere zum Transferieren eines Werkzeuges (2) in oder aus der Bearbeitungsmaschine (20) und/oder aus oder in einen Werkzeugspeicher (21), **dadurch gekennzeichnet, dass** die Werkzeug-Transfervorrichtung (1) nach einem der vorhergehenden Ansprüche ausgebildet ist.

25. Bearbeitungsmaschine und/oder Werkzeug-Beschickungsvorrichtung nach Anspruch 24, **dadurch gekennzeichnet, dass** die Beschickungsvorrichtung einen Werkzeugspeicher (21) mit einer Vielzahl an Speicherplätzen für Werkzeuge (2), insbesondere Biegewerkzeuge, umfasst.

26. Anordnung einer Bearbeitungsmaschine (20) und/oder einer Werkzeug-Beschickungsvorrichtung, insbesondere nach Anspruch 24 oder 25, und einer Werkzeug-Transfervorrichtung (1) zum Verschieben eines oder mehrerer Werkzeuge (2), insbesondere Biegewerkzeuge, in einer Führungsschiene (3), insbesondere zum Transferieren eines Werkzeuges (2) in oder aus der Bearbeitungsmaschine (20) und/oder aus oder in einen Werkzeugspeicher (21), **dadurch gekennzeichnet, dass** die Werkzeug-Transfervorrichtung (1) nach einem der vorhergehenden Ansprüche ausgebildet ist.

27. Anordnung nach Anspruch 26, **dadurch gekennzeichnet, dass** zumindest ein Abschnitt der Führung (8) oberhalb der Bearbeitungsmaschine (20) und/oder im oberen Teil der Werkzeug-Beschickungsvorrichtung verläuft und/oder dass ein Abschnitt der Führung (8) von unten nach oben verläuft.

28. Verfahren zum Verschieben eines oder mehrerer Werkzeuge (2), insbesondere Biegewerkzeuge, in einer Führungsschiene (3), insbesondere zum Transferieren eines Werkzeuges (2) in oder aus einer Bearbeitungsmaschine (20) und/oder aus oder in einen Werkzeugspeicher (21), **dadurch gekennzeichnet, dass** das Verschieben eines oder mehrerer Werkzeuge (2) mit einer Werkzeug-Transfervorrichtung (1) nach einem der Ansprüche 1 bis 23 durchgeführt wird.

## Claims

1. A tool transfer device (1) for displacing one or multiple tools (2), in particular bending tools, in a guide rail (3), comprising:
- at least one longitudinal push and pull transfer device (4, 4') for displacing the tool(s) (2), wherein the push and pull transfer device (4, 4') has a tool-side end and a tool-remote end, and wherein a channel (5, 5') for a supply line (6, 6') is formed in or on the push and pull transfer device (4, 4'),
- a receptacle (7), which comprises at least one, preferably spirally extending, guide (8, 18) for retracting the push and pull transfer device (4, 4'),
- at least one supply line (6, 6'), wherein a first section (16) of the supply line (6, 6') extends in the channel (5, 5') of the push and pull transfer device (4, 4'),
**characterized in that**
the guide (8, 18) comprises a longitudinal opening (9, 19) extending along the guide extension, and
a second section (17) of the supply line (6, 6') extends outside the push and pull transfer device (4, 4') and outside the guide (8, 18) of the receptacle (7), and
the supply line (6, 6'), between the first section (16) and the second section (17), exits the channel (5, 5') at an exit point (10), which is arranged in a region of the push and pull transfer device (4, 4') which region is located in the guide (8, 18) of the receptacle (7), and
the supply line (6), between the first section (16) and the second section (17), preferably in the region of the exit point (10), exits the guide (8) of the receptacle (7) through the longitudinal opening (9), and
the push and pull transfer device (4) comprises, in the region of its tool-side end, a coupling device (15), connected to the supply line (6), for coupling a tool (2) to the push and pull transfer device (4) and/or an effector, connected to the supply line (6), for acting on a tool (2), in particular an adjustment device for carrying out a tool adjustment, and
the exit point (10), at which the supply line (6, 6') exits the channel (5, 5'), is formed in the push and pull transfer device (4, 4') in the region of the tool-remote end of the push and pull transfer device (4, 4').

2. The tool transfer device according to claim 1, **characterized in that** the supply line (6, 6') is directed with its second section (17) to a supply device (14), preferably to a controller and/or to an electrical supply device and/or to a pressure and/or vacuum supply device.

3. The tool transfer device according to claim 1 or 2, **characterized in that** the exit point (10) is arranged in the end region - which is located in the guide (8) of the receptacle (7) - of the push and pull transfer device (4).

4. The tool transfer device according to one of the preceding claims, **characterized in that** the second section (17) is arranged so as to be suspended, wherein, preferably, the second section (17) crosses at least one, preferably at least two, guiding section(s) of the guide (8) and/or wherein, preferably, the second section (17) extends in a plane which is essentially parallel to the plane in which the guide (8) extends.

5. The tool transfer device according to one of the preceding claims, **characterized in that** the second section (17) of the supply line (6, 6 `) - in at least one position of the push and pull transfer device (4, 4') - rests at least partially, preferably along at least half of its length, on a support surface.

6. The tool transfer device according to one of the preceding claims, **characterized in that** the guide (8) opens via the longitudinal opening (9) in a direction that is transverse, preferably substantially perpendicular, to the plane in which the guide (8) runs.

7. The tool transfer device according to one of the preceding claims, **characterized in that** the plane, in which the guide (8) extends, is essentially vertical.

8. The tool transfer device according to one of the preceding claims, **characterized in that** the guide (8) comprises at least one section with a curved run, wherein preferably the guide (8) comprises a further section with a straight, preferably horizontal, run, wherein preferably the length of the further section having a straight run amounts to at least 1/3, preferably at least 1/2, of the total length of the guide (8).

9. The tool transfer device according to one of the preceding claims, **characterized in that** the guide (8) comprises a section with spiral-like run.

10. The tool transfer device according to one of the preceding claims, **characterized in that** the tool transfer device (1), preferably in the region of the exit opening (10), has a roll-up device (11) for rolling up the supply line (6), which roll-up device moves together with the push and pull transfer device (4) and is preferably connected to the push and pull transfer device (4).

11. The tool transfer device according to claim 10, **characterized in that** the roll-up device (11) is provided in the form of a drum or in the form of a roller or in the form of a coil or in the form of a hub.

12. The tool transfer device according to one of the preceding claims, **characterized in that** the supply line (6) comprises a rotary joint (12), preferably in the form of a slip ring joint, between the first section (16) and the second section (17).

13. The tool transfer device according to one of the preceding claims, **characterized in that** the transfer device (1) comprises a drive (13) for driving the push and pull transfer device (4), wherein, preferably, the drive (13) is arranged outside the receptacle (7).

14. The tool transfer device according to one of the preceding claims, **characterized in that** the supply line (6) comprises at least one cable and/or at least one pressure and/or vacuum line.

15. The tool transfer device according to one of the preceding claims, **characterized in that** the tool-remote end of the supply line (6) is coupled to a supply device (14), preferably to a controller and/or an electrical supply device and/or a pressure and/or vacuum supply device.

16. The tool transfer device according to one of the preceding claims, **characterized in that** the push and pull transfer device (4) is formed by a chain made of a plurality of interconnected chain links, wherein, preferably, the channel (5) for the supply line (6) runs through the chain links.

17. The tool-transfer device according to claim 16, **characterized in that** the exit point (10) at which the supply line (6) exits the channel (5) is formed **in that** chain link which forms the tool-remote end of the push and pull transfer device (4).

18. The tool transfer device according to one of the preceding claims, **characterized in that** the push and pull transfer device (4) in its cross section is completely accommodated within the guide (8) of the receptacle (7).

19. The tool transfer device according to one of the preceding claims, **characterized in that** the receptacle (7) is formed by a plate-shaped body and the guide (8) runs, preferably entirely, within the plate-shaped body, wherein, preferably, the longitudinal opening (9) is aligned with the surface of the plate-shaped body.

20. The tool transfer device according to one of the preceding claims, **characterized in that** the receptacle (7) comprises a first, preferably spirally extending, guide (8) and a second, preferably spirally extending, guide (18), wherein a first longitudinal push and pull transfer device (4), preferably for displacing upper tools, is assigned to the first guide (8) and a second longitudinal push and pull transfer device (4'), preferably for displacing lower tools, is assigned to the second guide (18).

21. The tool transfer device according to claim 20, **characterized in that** the entry into the first guide (8) is arranged above the entry into the second guide (18).

22. The tool transfer device according to claim 20 or 21, **characterized in that** the first guide (8) and the second guide (18) are formed in a common, preferably plate-shaped, receiving body, wherein the longitudinal opening (9) of the first guide (8) is located on a first side of the receiving body and the longitudinal opening (19) of the second guide (18) is located on a second side of the receiving body, the second side being opposite to the first side.

23. The tool transfer device according to one of the preceding claims, **characterized in that** the windings of the first guide (8) extend between the windings of the second guide (18), and/or
the windings of the first guide (8) and the windings of the second guide (18) at least partially overlap.

24. A processing machine (20), in particular a bending press, and/or a tool loading device for a processing machine (20), in particular for a bending press, having a tool transfer device (1) for displacing one or multiple tools (2), in particular bending tools, in a guide rail (3), in particular for transferring a tool (2) into or out of the processing machine (20) and/or out of or into a tool storage (21), **characterized in that** the tool transfer device (1) is designed according to one of the preceding claims.

25. The processing machine and/or tool loading device according to claim 24, **characterized in that** the loading device comprises a tool storage (21) with a plurality of storage locations for tools (2), in particular bending tools.

26. An arrangement of a processing machine (20) and/or a tool loading device, in particular according to claim 24 or 25, and a tool transfer device (1) for displacing one or multiple tools (2), in particular bending tools, in a guide rail (3), in particular for transferring a tool (2) into or out of the processing machine (20) and/or out of or into a tool storage (21), **characterized in that** the tool transfer device (1) is designed according to one of the preceding claims.

27. The arrangement according to claim 26, **characterized in that** the at least one section of the guide (8) extends above the processing machine (20) and/or in the upper part of the tool loading device and/or that a section of the guide (8) extends from bottom to top.

28. A method for displacing one or multiple tools (2), in particular bending tools, in a guide rail (3), in particular for transferring a tool (2) into or out of a processing machine (20) and/or out of or into a tool storage (21), **characterized in that** the displacement of one or multiple tools (2) is carried out with a tool transfer device (1) according to one of claims 1 to 23.

## Revendications

1. Dispositif de transfert d'outil (1) pour le coulissement d'un ou plusieurs outils (2), plus particulièrement des outils de pliage, dans un rail de guidage (3), comprenant :
- au moins un dispositif de transmission de poussée et de traction allongé (4, 4') pour le coulissement du ou des outils (2), dans lequel le dispositif de transmission de poussée et de traction (4, 4') comprend une extrémité côté outil et une extrémité éloignée de l'outil et dans lequel, dans ou sur le dispositif de transmission de poussée et de traction (4, 4'), est réalisé un canal (5, 5') pour une conduite d'alimentation (6, 6'),
- un logement (7), qui comprend au moins un guidage (8, 18) s'étendant de préférence en spirale, pour l'introduction du dispositif de transmission de poussée et de traction (4, 4'),
- au moins une conduite d'alimentation (6, 6'), dans lequel une première portion (16) de la conduite d'alimentation (6, 6') s'étend dans le canal (5, 5') du dispositif de transmission de poussée et de traction (4, 4'),
**caractérisé en ce que**
le guidage (8, 18) comprend une ouverture longitudinale (9, 19) s'étendant le long de l'extension du guidage et
une deuxième portion (17) de la conduite d'alimentation (6, 6') s'étend à l'extérieur du dispositif de transmission de poussée et de traction (4, 4') et à l'extérieur du guidage (8, 18) du logement (7) et
la conduite d'alimentation (6, 6') sort du canal (5, 5') entre la première portion (16) et la deuxième portion (17), au niveau d'un point de sortie (10) qui est disposé dans une zone - qui se trouve dans le guidage (8, 18) du logement (7) - du dispositif de transmission de poussée et de traction (4, 4') et
la conduite d'alimentation (6) sort du guidage (8) du logement (7) entre la première portion (16) et la deuxième portion (17), de préférence au niveau du point de sortie (10), à travers l'ouverture longitudinale (9) et
le dispositif de transmission de poussée et de traction (4) comprend, au niveau de son extrémité côté outil, un dispositif de couplage (15) relié à la conduite d'alimentation (6), pour le couplage d'un outil (2) au dispositif de transmission de poussée et de traction (4) et/ou d'un effecteur relié à la conduite d'alimentation (6), pour effectuer une action sur un outil (2), plus particulièrement un dispositif de réglage pour la réalisation d'un réglage d'outil et
le point de sortie (10), au niveau duquel la conduite d'alimentation (6, 6') sort du canal (5, 5'), est réalisé dans le dispositif de transmission de poussée et de traction (4, 4') au niveau de l'extrémité éloignée de l'outil du dispositif de transmission de poussée et de traction (4, 4').

2. Dispositif de transfert d'outil selon la revendication 1, **caractérisé en ce que** la conduite d'alimentation (6, 6') est guidée, avec sa deuxième portion (17), vers un dispositif d'alimentation (14), de préférence vers un dispositif de commande et/ou vers un dispositif d'alimentation électrique et/ou vers un dispositif d'alimentation en pression et/ou en dépression.

3. Dispositif de transfert d'outil selon la revendication 1 ou 2, **caractérisé en ce que** le point de sortie (10) est disposé dans la zone d'extrémité - se trouvant dans le guidage (8) du logement (7) - du dispositif de transmission de poussée et de traction (4).

4. Dispositif de transfert d'outil selon l'une des revendications précédentes, **caractérisé en ce que** la deuxième portion (17) est disposée de manière suspendue, dans lequel, de préférence la deuxième portion (17) croise au moins une, de préférence deux, portions du guidage (8) et/ou dans lequel, de préférence, la deuxième portion (17) s'étend dans un plan qui est globalement parallèle au plan dans lequel s'étend le guidage (8).

5. Dispositif de transfert d'outil selon l'une des revendications précédentes, **caractérisé en ce que** la deuxième portion (17) de la conduite d'alimentation (6, 6') s'appuie - dans au moins une position du dispositif de transmission de poussée et de traction (4, 4') - au moins partiellement, de préférence sur au moins la moitié de sa longueur, sur une surface d'appui.

6. Dispositif de transfert d'outil selon l'une des revendications précédentes, **caractérisé en ce que** le guidage (8) s'ouvre, par l'intermédiaire de l'ouverture longitudinale (9), dans une direction qui est transversale, de préférence globalement perpendiculaire, au plan dans lequel s'étend le guidage (8).

7. Dispositif de transfert d'outil selon l'une des revendications précédentes, **caractérisé en ce que** le plan dans lequel s'étend le guidage (8) est globalement vertical.

8. Dispositif de transfert d'outil selon l'une des revendications précédentes, **caractérisé en ce que** le guidage (8) comprend au moins une portion avec une extension incurvée, dans lequel, de préférence, le guidage (8) comprend une portion supplémentaire avec une extension droite, de préférence horizontale, dans lequel, de préférence, la longueur de la portion supplémentaire avec une extension droite représente au moins 1/3, de préférence au moins 1/2 de la longueur totale du guidage (8).

9. Dispositif de transfert d'outil selon l'une des revendications précédentes, **caractérisé en ce que** le guidage (8) comprend une portion avec une extension en spirale.

10. Dispositif de transfert d'outil selon l'une des revendications précédentes, **caractérisé en ce que** le dispositif de transfert d'outil (1) comprend, de préférence au niveau de l'ouverture de sortie (10), un dispositif d'enroulement (11) se déplaçant avec le dispositif de transmission de poussée et de traction (4), de préférence relié avec le dispositif de transmission de poussée et de traction (4), pour l'enroulement de la conduite d'alimentation (6).

11. Dispositif de transfert d'outil selon la revendication 10, **caractérisé en ce que** le dispositif d'enroulement (11) se présente sous la forme d'un tambour ou sous la forme d'un rouleau ou sous la forme d'une bobine ou sous la forme d'un moyeu.

12. Dispositif de transfert d'outil selon l'une des revendications précédentes, **caractérisé en ce que** la conduite d'alimentation (6) comprend, entre la première portion (16) et la deuxième portion (17), une liaison rotative (12), de préférence sous la forme d'une liaison à bague de glissement.

13. Dispositif de transfert d'outil selon l'une des revendications précédentes, **caractérisé en ce que** le dispositif de transfert d'outil (1) comprend un dispositif d'entraînement (13) pour l'entraînement du dispositif de transmission de poussée et de traction (4), dans lequel, de préférence, le dispositif d'entraînement (13) est disposé à l'extérieur du logement (7).

14. Dispositif de transfert d'outil selon l'une des revendications précédentes, **caractérisé en ce que**
la conduite d'alimentation (6) comprend au moins un câble et/ou au moins une conduite de pression et/ou de dépression.

15. Dispositif de transfert d'outil selon l'une des revendications précédentes, **caractérisé en ce que** l'extrémité éloignée de l'outil de la conduite d'alimentation (6) est raccordée à un dispositif d'alimentation (14), de préférence à un dispositif de commande et/ou à un dispositif d'alimentation électrique et/ou à un dispositif d'alimentation en pression et/ou en dépression.

16. Dispositif de transfert d'outil selon l'une des revendications précédentes, **caractérisé en ce que** le dispositif de transmission de poussée et de traction (4) est constitué d'une chaîne composée d'une pluralité de maillons reliés entre eux, dans lequel, de préférence, le canal (5) pour la conduite d'alimentation (6) s'étend à travers les maillons de la chaîne.

17. Dispositif de transfert d'outil selon la revendication 16, **caractérisé en ce que** le point de sortie (10), au niveau duquel la conduite d'alimentation (6) sort du canal (5) est réalisé dans le maillon de chaîne formant l'extrémité éloignée de l'outil du dispositif de transmission de poussée et de traction (4).

18. Dispositif de transfert d'outil selon l'une des revendications précédentes, **caractérisé en ce que** le dispositif de transmission de poussée et de traction (4) est logé, dans sa section transversale, entièrement à l'intérieur du guidage (8) du logement (7).

19. Dispositif de transfert d'outil selon l'une des revendications précédentes, **caractérisé en ce que** le logement (7) est constitué d'un corps en forme de plaque et le guidage (8) s'étend, de préférence entièrement, à l'intérieur du corps en forme de plaque, dans lequel, de préférence, l'ouverture longitudinale (9) est alignée avec la surface du corps en forme de plaque.

20. Dispositif de transfert d'outil selon l'une des revendications précédentes, **caractérisé en ce que** le logement (7) comprend un premier guidage (8) s'étendant de préférence en spirale et un deuxième guidage (18), de préférence de forme spiralée, dans lequel, au premier guidage (8), correspond un premier dispositif de transmission de poussée et de traction (4), de préférence pour le coulissement d'outils supérieurs et, au deuxième guidage (18), correspond un deuxième dispositif de transmission de poussée et de traction (4'), de préférence pour le coulissement d'outils inférieurs.

21. Dispositif de transfert d'outil selon la revendication 20, **caractérisé en ce que** l'entrée dans le premier guidage (8) est disposée au-dessus de l'entrée dans le deuxième guidage (18).

22. Dispositif de transfert d'outil selon la revendication 20 ou 21, **caractérisé en ce que** le premier guidage (8) et le deuxième guidage (18) sont réalisés dans un corps de logement commun, de préférence en forme de plaque, dans lequel l'ouverture longitudinale (9) du premier guidage (8) se trouve sur un premier côté du corps de logement et l'ouverture longitudinale (19) du deuxième guidage (18) se trouve sur un deuxième côté, opposé au premier côté, du corps de logement.

23. Dispositif de transfert d'outil selon l'une des revendications précédentes, **caractérisé en ce que**
les spires du premier guidage (8) s'étendent entre les spires du deuxième guidage (18) et/ou
les spires du premier guidage (8) et les spires du deuxième guidage (18) se superposent entre elles au moins partiellement.

24. Machine d'usinage (20), plus particulièrement presse plieuse et/ou dispositif d'alimentation d'outil pour une machine d'usinage (20), plus particulièrement pour une presse plieuse, avec un dispositif de transfert d'outil (1) pour le coulissement d'un ou plusieurs outils (2), plus particulièrement d'outils de pliage, dans un rail de guidage (3), plus particulièrement pour le transfert d'un outil (2) vers ou hors de la machine d'usinage (20) et/ou hors ou vers un magasin d'outil (21), **caractérisé en ce que** le dispositif de transfert d'outil (1) est conçu selon l'une des revendications précédentes.

25. Machine d'usinage et/ou dispositif d'alimentation d'outil selon la revendication 24, **caractérisé en ce que** le dispositif d'alimentation d'outil comprend un magasin d'outils (21) avec une pluralité d'emplacements pour des outils (2), plus particulièrement des outils de pliage.

26. Disposition d'une machine d'usinage (20) et/ou d'un dispositif d'alimentation d'outil, plus particulièrement selon la revendication 24 ou 25, et d'un dispositif de transfert d'outil (1) pour le coulissement d'un ou plusieurs outils (2), plus particulièrement d'outils de pliage, dans un rail de guidage (3), plus particulièrement pour le transfert d'un outil (2) vers ou hors de la machine d'usinage (20) et/ou hors ou vers un magasin d'outils (21), **caractérisée en ce que** le dispositif de transfert d'outil (1) est conçu selon l'une des revendications précédentes.

27. Disposition selon la revendication 26, **caractérisée en ce qu'**au moins une portion du guidage (8) s'étend au-dessus de la machine d'usinage (20) et/ou dans la partie supérieure du dispositif d'alimentation d'outil et/ou une portion du guidage (8) s'étend du bas vers le haut.

28. Procédé de coulissement d'un ou plusieurs outils (2), plus particulièrement des outils de pliage, dans un rail de guidage (3), plus particulièrement pour le transfert d'un outil (2) vers ou hors d'une machine d'usinage (20) et/ou hors ou vers un magasin d'outils (21), **caractérisé en ce que** le coulissement d'un ou plusieurs outils (2) est effectué avec un dispositif de transfert d'outil (1) selon l'une des revendications 1 à 23.
